# FASCICULE DE BREVET EUROPEEN

(11) **EP 4 355 988 B1**
(45) Date de publication et mention de la délivrance du brevet: **05.03.2025**
(21) Numéro de dépôt: 22735211.9
(22) Date de dépôt: 10.06.2022
(51) Int. Cl.: F02C 7/045, G10K 11/168, G10K 11/172, F02K 1/82

(54) **PANNEAU DE TRAITEMENT ACOUSTIQUE RENFORCÉ POUR UN ENSEMBLE PROPULSIF D'AERONEF**
VERSTÄRKTE SCHALLBEHANDLUNGSPLATTE FÜR EINE FLUGZEUGANTRIEBSEINHEIT
REINFORCED ACOUSTIC TREATMENT PANEL FOR AN AIRCRAFT PROPULSION UNIT

(30) Priorité: 15.06.2021 FR 2106342
(43) Date de publication de la demande: 24.04.2024
(73) Titulaire: Safran Nacelles, 76700 Gonfreville-l'Orcher (FR)
(72) Inventeur: GONIDEC, Patrick, 77550 Moissy-Cramayel (FR); LAFONT, Albin, 77550 Moissy-Cramayel (FR); DIGEOS, Virginie Emmanuelle Anne-Marie, 77550 Moissy-Cramayel (FR); HARDYMAN, Stuart, 77550 Moissy-Cramayel (FR)
(74) Mandataire: Cabinet Beau de Loménie
(86) Numéro de dépôt international: PCT/FR2022/051110
(87) Numéro de publication internationale: WO 2022/263751

(56) Documents cités:
- EP-A2- 0 311 931
- US-A- 4 265 955
- US-A1- 2013 126 265

## Description

### Domaine Technique

L'invention concerne un panneau de traitement acoustique pour l'absorption d'ondes sonores, et plus particulièrement un panneau constituant également un élément travaillant d'une structure.

### Technique antérieure

Classiquement, la réduction du bruit d'un turboréacteur, et plus précisément celui rayonné par l'interaction entre les rotors et leurs environnements, est réalisée à l'aide de panneaux absorbants disposés au niveau des surfaces mouillées des conduits dans lesquels se propagent les ondes sonores. On entend par surfaces mouillées, les surfaces en contact avec un écoulement fluide. Ces panneaux sont des matériaux composites de type sandwich formés d'une peau perforée (ou acoustiquement poreuse) qui fait face à la zone génératrice de bruit, d'une peau arrière, et d'une structure alvéolaire de type nid d'abeille emprisonnée entre la peau arrière et la peau perforée et dont les propriétés absorbantes sont en partie obtenues grâce au principe des résonateurs de Helmholtz formés par les alvéoles du nid d'abeille formant des cellules d'absorption acoustique. Ces cellules peuvent avoir des formes sensiblement prismatiques perpendiculairement aux peaux, une ou plusieurs peaux perforées supplémentaires peuvent également être adjointes.

En général, la résistance structurale du panneau en flexion est apportée par les peaux, le nid d'abeille (NIDA) jouant essentiellement le rôle de transmission du cisaillement entre les peaux, de manière analogue à l'âme d'une poutre. Ces panneaux peuvent également être sollicités en traction, avec un effort de traction exercé d'un côté par la peau interne et de l'autre côté par la peau externe. Ce dernier cas est très courant sur une entrée d'air où il est nécessaire de connecter la peau aérodynamique, celle perforée, sur la lèvre monolithique de l'entrée d'air, mais où la connexion du panneau à la bride moteur passe par une bride nécessairement connectée à la peau arrière du panneau acoustique. Cette configuration entraîne alors un cisaillement induit par les efforts de poussée de la lèvre et leur réaction de bride nécessairement désalignées.

Aussi bien dans le cas d'une traction que d'une flexion se pose un problème majeur de conception structurale relatif à la concentration de contraintes en cisaillement qui siège sur les bords de ces panneaux acoustiques, et en particulier dans les zones de connexion du panneau au reste de la structure.

Certaines architectures des panneaux acoustiques permettent d'avoir une coupe orthogonale des deux peaux sans prévoir de connexion spécifique entre les peaux. Dans cette configuration architecturale, le nid d'abeille est beaucoup plus sensible aux forces de cisaillement. Par conséquent, des panneaux acoustiques avec une telle architecture sont plutôt destinés à être disposés dans des endroits où ils subiront peu de contraintes de cisaillement ou des endroits très optimisés en termes d'introduction des efforts. Cette architecture reste néanmoins exceptionnelle.

En effet, dans la plupart des cas, les bords, ou contours, des panneaux acoustiques correspondent à des zones de connexion structurale avec souvent l'introduction d'un effort tranchant important. Ceci engendre un cisaillement que la plupart des nids d'abeille ne peuvent pas admettre même avec des cellules d'absorption acoustique dont les cavités ont été remplies par un composant structural (mousse forte ou résine) appelé « potting » en anglais.

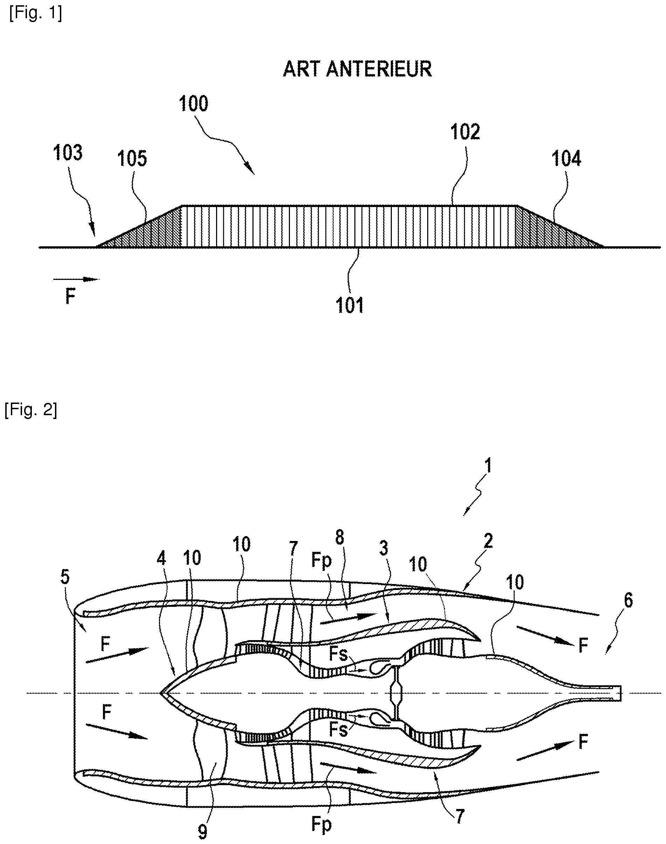

La solution la plus courante illustrée sur la figure 1, qui représente un panneau acoustique 100 de l'état de la technique, est alors de faire se rejoindre la peau avant 101, la peau perforée, et la peau arrière 102 et de les lier ensemble sur tout le périmètre 103 du panneau acoustique 100. C'est ce que l'on appelle le bordurage du panneau Pa.

En général, pour réaliser un bordurage tel qu'illustré sur la figure 1, on conserve la forme de la peau avant 101 destinée à être en contact avec un écoulement fluidique F, tandis qu'on modifie celle de la peau arrière 102 comme un chanfrein 104 pour que la peau arrière 102 rejoigne la peau avant 101, la peau avant 101 formant un angle dit d'accostage avec la peau arrière 102. On a alors un bordurage incliné, qui est de très loin le plus appliqué.

Malgré cette astuce de conception, cette zone reste fréquemment très critique en termes de cisaillement. Et plus l'angle d'accostage des deux peaux est obtu plus le pic de cisaillement est élevé, en particulier quand cet angle dépasse 60°. Or le traitement acoustique n'est efficace que si le nid d'abeille a une certaine hauteur accordée à la fréquence du bruit à atténuer. Un faible angle d'accostage a pour effet d'avoir une bordure importante avec des cellules n'ayant pas toute leur hauteur, ce qui induit donc une importante perte de surface efficace sur le pourtour du panneau, d'autant plus que ces zones restent généralement remplies de résine de renforcement 105 (potting), ce qui annule alors totalement l'effet d'atténuation acoustique.

Avec une conception traditionnelle, le bon comportement structural du bordurage nuit malheureusement au comportement acoustique du panneau sandwich, du moins sur ses zones périphériques.

Il est possible de renforcer considérablement la peau arrière pour lui faire reprendre le cisaillement dans le cas où l'angle de bordurage est grand voire égal à 90°, mais ceci au détriment de la masse et en gardant souvent une portion de la structure alvéolaire remplie de potting. Cette conception favorise l'acoustique mais pénalise la masse et/ou le comportement structural du panneau.

Par ailleurs, lorsqu'un panneau de traitement acoustique est disposé sur une paroi d'une entrée d'air d'une turbomachine en aval d'une lèvre délimitant l'entrée d'air, ce panneau étant généralement connecté à la structure environnante de manière peu adroite, notamment via une cornière en Z ou un bordurage incliné, soumis à des forces de traction. La plupart de ces problèmes proviennent du fait que l'on doit contourner le nid d'abeille du panneau acoustique pour relier la paroi formant la lèvre à la peau arrière du panneau, alors que la paroi formant la lèvre est au même niveau que la peau avant. Ceci induit soit une diminution de la réduction acoustique (bordurage incliné), soit une structure mal agencée (avec un impact masse in fine).

Par ailleurs, dans cette configuration, et tout particulièrement si une partie de la lèvre est munie d'un traitement acoustique lors de l'utilisation d'un dégivrage pneumatique, la cloison avant est vivement chauffée. De ce fait le panneau acoustique intégré étendu se trouve exposé à de fortes températures et doit être constitué de matériaux résistant à la chaleur plus onéreux. De plus, dans l'état de l'art, l'accroche de ce panneau au reste du panneau interne de l'entrée d'air s'effectue sensiblement à l'endroit de la jonction entre la cloison avant et le panneau interne. De ce fait cette cloison nécessite soit une zone non acoustique sise entre le panneau acoustique de lèvre "chaud" et le panneau interne, soit elle se raccorde au panneau interne ce qui induit un flux thermique souvent inacceptable pour ce dernier. Il en résulte respectivement soit une perte d'efficacité acoustique soit une perte d'efficacité structurale qui peut être compensée par l'ajout d'un renfort de la peau arrière à l'avant du panneau interne sous la forme d'inserts isolants thermiques qui sont très délicats et onéreux à fabriquer et qui génèrent une augmentation de la masse.

Il est connu du document US 4 265 955 un panneau de traitement acoustique selon le préambule de la revendication 1.

### Exposé de l'invention

L'invention vise à fournir un panneau de traitement acoustique pour turbomachine permettant de résoudre les problèmes de transfert d'effort et de cisaillement de bordurage évoqués ci-dessus sans compromettre significativement le comportement acoustique des bords du panneau acoustique. Autrement dit, l'invention vise à fournir un panneau de traitement acoustique présentant un renforcement structurel permettant d'avoir une meilleure résistance aux contraintes de cisaillement qu'il peut subir lorsque la turbomachine est en fonctionnement tout en utilisant toute la surface du panneau pour le de traitement acoustique.

Un objet de l'invention propose un panneau de traitement acoustique destiné à être disposé sur au moins une paroi d'un ensemble propulsif d'un aéronef en contact avec un écoulement fluidique, le panneau comprenant une première peau acoustiquement réfléchissante, une seconde peau acoustiquement poreuse destinée à être en contact avec un écoulement fluidique, une structure en nid d'abeilles s'étendant entre la première peau et la seconde peau et comportant une pluralité de cavités, et le panneau de traitement acoustique comprend au moins une paroi de renfort acoustiquement transparente traversant une pluralité de cavités de la structure en nid d'abeilles et s'étendant depuis la seconde peau jusqu'à la première peau en formant un angle non orthogonal avec les première et seconde peaux.

Ladite au moins une paroi de renfort est formée en une pièce avec la première paroi acoustiquement réfléchissante. On entend par paroi acoustiquement poreuse, une paroi qui comprend des orifices permettant de laisser passer une partie des ondes acoustiques sans les altérer significativement que ce soit en termes d'intensité ou de fréquence. On entend par paroi acoustiquement opaque ou acoustiquement réfléchissante, une paroi ne laissant passer aucune onde acoustique sans l'altérer au moins en partie, notamment en intensité. Une paroi acoustiquement opaque réfléchira la plus grande partie des ondes acoustiques incidentes.

On entend notamment par ensemble propulsif d'un aéronef l'ensemble comprenant un turboréacteur et une nacelle.

Le lien entre la première peau et la seconde peau apporté par la paroi de renfort permet ainsi d'améliorer la résistance du panneau de traitement acoustique aux efforts de cisaillement qu'il peut subir. Et, grâce à la transparence acoustique de la paroi de renfort, ce renforcement structurel est conféré au panneau de traitement acoustique sans dégrader la surface du panneau permettant de réaliser une absorption acoustique, c'est-à-dire sans dégrader l'efficacité du traitement acoustique du panneau.

Selon un premier aspect du panneau de traitement acoustique, ladite paroi de renfort acoustiquement transparente présente de préférence un taux de perforation supérieur ou égal à 18%.

Un taux de perforation de 18% minimum de la paroi de renfort permet d'assurer une transparence acoustique de la paroi de renfort. Le taux de perforation correspond au rapport entre la surface totale perforée de la paroi de renfort et la surface totale de la paroi de renfort, perforée ou non.

De préférence le taux de perforation est inférieur à 80% pour assurer une transparence acoustique de la paroi de renfort tout en conservant une bonne capacité de transfert des efforts.

Selon un deuxième aspect du panneau de traitement acoustique, la structure en nid d'abeilles peut s'étendre, dans un plan parallèle à la seconde peau, à l'intérieur d'un périmètre extérieur, et ladite au moins une paroi de renfort peut s'étendre à l'intérieur de la structure en nid d'abeilles depuis la seconde peau jusqu'à la première peau sur une portion de bordure de la structure du nid d'abeilles s'étendant, dans le plan parallèle à la seconde peau, depuis ledit périmètre extérieur vers l'intérieur de la structure en nid d'abeilles.

La ou les paroi(s) de renfort se trouve(nt) ainsi uniquement sur le ou les bords du panneau de traitement acoustique.

Selon un troisième aspect du panneau de traitement acoustique, le panneau peut comprendre en outre au moins une portion de panneau s'étendant, selon une direction orthogonale à la première peau, entre une paroi de renfort et une portion de de première peau, ladite au moins une portion de panneau étant rapportée et fixée au reste du panneau par cocuisson lors de la fabrication du panneau Dans un autre objet de l'invention, il est proposé un ensemble propulsif d'aéronef destiné à être monté sur un aéronef, l'ensemble propulsif comprenant au moins un panneau de traitement acoustique tel que défini ci-dessus.

Selon un premier aspect de l'ensemble propulsif, celui-ci peut comprendre au moins une entrée d'air dotée d'une lèvre frontale, d'une paroi externe et d'une paroi interne, et raccordée à un desdits panneaux de traitement acoustique formant au moins une partie de la paroi interne.

Selon un second aspect de l'ensemble propulsif, ladite paroi de renfort dudit panneau de traitement acoustique peut se prolonger à l'extérieur dudit panneau et être raccordée à la lèvre frontale de l'entrée d'air.

Dans un autre objet de l'invention, il est proposé un aéronef comprenant au moins un ensemble propulsif tel que défini ci-dessus.

Dans un autre objet de l'invention, il est proposé un procédé de fabrication d'un panneau de traitement acoustique destiné à être disposé sur au moins une paroi d'un ensemble propulsif d'aéronef en contact avec un écoulement fluidique, le procédé de fabrication du panneau comprenant une étape d'empilement d'une première peau acoustiquement réfléchissante, d'une structure en nid d'abeilles et d'une seconde peau acoustiquement poreuse destinée à être en contact avec un écoulement fluidique, la structure en nid d'abeilles s'étendant entre la première peau et la seconde peau et comportant une pluralité de cavités.

Le procédé comprend en outre une étape de pose d'au moins une paroi de renfort acoustiquement transparente traversant une pluralité de cavités de la structure en nid d'abeilles et s'étendant depuis la seconde peau jusqu'à la première peau en formant un angle non orthogonal avec les première et seconde peaux. Ladite au moins une paroi de renfort est formée en une pièce avec la première peau acoustiquement réfléchissante

Selon un aspect du procédé selon l'invention, le procédé peut comprendre en outre une étape réalisation d'au moins une portion de panneau destiné à s'étendre, selon une direction orthogonale à la première peau, entre une paroi de renfort et une portion de première peau, et une étape de raccordement par cocuisson de ladite au moins une portion de panneau au reste du panneau.

### Brève description des dessins

L'invention sera mieux comprise à la lecture faite ci-après, à titre indicatif mais non limitatif, en référence aux dessins annexés sur lesquels :
[Fig. 1] La figure 1, déjà présentée, illustre une vue en coupe d'un panneau de traitement acoustique selon l'état de la technique.
[Fig. 2] La figure 2 présente une vue en section d'un ensemble propulsif d'un aéronef selon un mode de réalisation de l'invention, dans un plan longitudinal de l'ensemble propulsif d'un aéronef.
[Fig. 3] La figure 3 illustre une vue partielle en perspective d'un panneau de traitement acoustique selon un mode de réalisation de l'invention.
[Fig. 4] La figure 4 présente schématiquement une vue en coupe du panneau de traitement acoustique de la figure 3.
[Fig. 5] La figure 5 présente un zoom d'une partie du panneau de traitement acoustique de la figure 4 avec une portion triangulaire séparée du reste du panneau.
[Fig. 6] La figure 6 présente schématiquement une vue en coupe d'une portion de la nacelle de l'ensemble propulsif de la figure 2 au niveau du canal d'entrée d'air selon un premier mode de réalisation.
[Fig. 7] La figure 7 représente schématiquement une vue en coupe d'une portion de la nacelle de l'ensemble propulsif de la figure 2 au niveau du canal d'entrée d'air selon un second mode de réalisation.

### Description des modes de réalisation

Sur la figure 2 est représentée une vue en section d'un ensemble propulsif 1 d'un aéronef selon un mode de réalisation non-limitatif de l'invention, dans un plan longitudinal de l'ensemble propulsif 1.

L'ensemble propulsif 1 comprend une nacelle 2, un carter intermédiaire 3 et un carter interne 4. La nacelle 2 et les deux carters 3 et 4 sont coaxiaux. La nacelle 2 définit à une première extrémité un canal d'entrée 5 d'un écoulement de fluide et à une seconde extrémité, opposée à la première extrémité, un canal d'échappement 6 d'un écoulement de fluide. La nacelle 2 et le carter intermédiaire 3 délimitent entre eux une veine primaire 7 d'écoulement de fluide. Le carter intermédiaire 3 et le carter interne 4 délimitent entre eux une veine secondaire 8 d'écoulement de fluide. La veine primaire 7 et la veine secondaire 8 sont disposés selon une direction axiale de l'ensemble propulsif entre le canal d'entrée 5 et le canal d'échappement 6.

L'ensemble propulsif 1 comprend en outre une soufflante 9 configurée pour délivrer un flux d'air F comme écoulement fluidique, le flux d'air F étant divisé en sortie de la soufflante en un flux primaire F_{P} circulant dans la veine primaire 7 et en un flux secondaire F_{S} circulant dans la veine secondaire 8.

L'ensemble propulsif 1 comprend en outre au moins un panneau de traitement acoustique 10 configuré pour atténuer les ondes acoustiques émises par l'ensemble propulsif 1 avant que ces ondes ne s'échappent à l'extérieure, radialement, de la nacelle 2 de l'ensemble propulsif 1.

Dans le cas d'une turbomachine non-carénée, le traitement acoustique serait configuré pour atténuer ou limiter les réfractions des ondes acoustiques rayonnées par les hélices.

Chaque panneau de traitement acoustique 10 est configuré pour atténuer des ondes acoustiques dont la fréquence appartient à une plage de fréquences prédéterminée. Dans le mode de réalisation illustré sur la figure 1, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale et notamment sur la portion portant la soufflante 9, et, d'autre part, sur une portion en aval du carter intermédiaire 3.

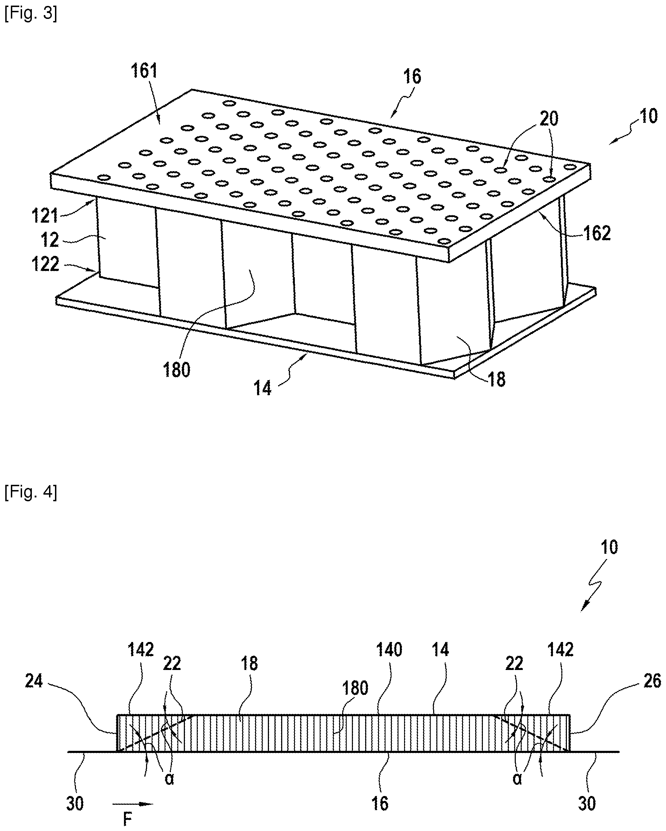

Sur la figure 3 est représentée une vue partielle en perspective d'un panneau de traitement acoustique 10 selon un mode de réalisation de l'invention.

En référence à la figure 3, le panneau de traitement acoustique 10 comporte un cœur 12, une couche ou paroi réfléchissante 14 et une couche ou paroi d'entrée 16 destinée à être en contact avec un écoulement fluidique F, F_{P} ou F_{S}.

Le cœur 12 présente une structure en nid d'abeille. Plus précisément, le cœur 12 comporte une pluralité de cellules acoustiques 18, ou alvéoles, délimitées par des parois 180 et agencées selon une structure en nid d'abeille connue.

Chaque alvéole 18 débouche sur une première face 121 du cœur 12 et sur une deuxième face 122 du cœur 12 située à l'opposé de la première face 121.

La première face 121 du cœur 12 est destinée à être orientée vers la veine d'écoulement d'air primaire 7 ou d'air secondaire 8 selon l'emplacement du panneau de traitement acoustique 10. La deuxième face 122 du cœur 12 est destinée à être orientée à l'opposé de la veine d'air.

Selon le mode de réalisation, le cœur 12 peut être réalisé en métal, ou dans un matériau composite, tel qu'un matériau composite formé de fibres de carbone noyées dans une matrice de résine durcie.

La couche réfléchissante 14 est adaptée pour réfléchir des ondes acoustiques présentant une fréquence appartenant à la plage de fréquences prédéterminée.

La couche réfléchissante 14 s'étend en regard de la deuxième face 122 du cœur 12, en étant au contact de la deuxième face 122. Plus précisément, la couche réfléchissante 14 est solidaire de la deuxième face 122 du cœur 12, par exemple collée à la deuxième face 122 du cœur 12.

Selon le mode de réalisation, la couche réfléchissante 14 peut être réalisée en métal ou dans un matériau composite, tel qu'un matériau composite formé de fibres de carbone noyées dans une matrice de résine durcie. Dans une variante, la couche formant le fond des alvéoles 18 peut être non réfléchissante.

La couche d'entrée 16 s'étend en regard de la première face 121 du cœur 12, en étant au contact de la première face 121. Plus précisément, la couche d'entrée 16 est solidaire de la première face 121 du cœur 12, par exemple collée à la première face 121 du cœur 12.

La couche d'entrée 16 est une peau monobloc perforée comprenant une pluralité d'orifices 20 traversant la couche d'entrée 16 depuis la première face 161 jusqu'à la seconde face 162 de la couche d'entrée 16. Chaque orifice 20 débouche sur une alvéole 18 du cœur 12, plusieurs orifices 20 pouvant déboucher sur une même alvéole 18. La couche d'entrée 16 présente ainsi une porosité d'environ 10% à 15%.

Les panneaux 10 peuvent être des panneaux dits à un degré de liberté, ou SDOF en anglais pour « single degree of freedom », c'est-à-dire avec une seule couche de cellules acoustiques 18, ou des panneaux dits à deux degrés de liberté, ou DDOF en anglais pour « double degree of fredom », c'est-à-dire avec deux couches de cellules acoustiques 18 superposées l'une sur l'autre et séparées par un septum , c'est-à-dire par une peau acoustiquement poreuse.

Sur la figure 4 est illustrée schématiquement une vue en coupe du panneau de traitement acoustique 10 de la figure 3.

Comme cela est illustré sur les figures 3 et 4, le panneau de traitement acoustique 10 présente une forme générale de parallélépipède rectangle présente, en coupe une forme générale rectangulaire qui peut être courbé pour suivre les parois de la nacelle sur lesquels il est monté.

En coupe, comme illustré sur la figure 4, le panneau de traitement acoustique 10 comprend donc une forme rectangulaire, avec une largeur du rectangle s'étendant orthogonalement entre la couche d'entrée 16 et la couche réfléchissante 14, et une longueur comprise entre une première extrémité 24 longitudinale et une seconde extrémité longitudinale 26, les première et seconde extrémités longitudinales 24 et 26 définissant les bords du panneau 10.

A chaque extrémité du rectangle selon la direction de sa longueur, le panneau 10 comprend une paroi de renfort 22 s'étendant, à l'intérieur du panneau 10, selon une direction oblique entre la couche d'entrée 16 et la couche réfléchissante 14. Chaque paroi de renfort 22 traverse ainsi une pluralité de cavités 18 du cœur 12. Chaque paroi de renfort 22 forme un angle α avec la couche réfléchissante 14 d'une part et avec la couche d'entrée 16 d'autre part.

Chaque paroi de renfort 22 est acoustiquement transparente, c'est-à-dire qu'elle comprend des orifices permettant de laisser passer une partie des ondes acoustiques sans les altérer significativement que ce soit en termes d'intensité ou de fréquence. Dans l'exemple illustré sur la figure 4, les parois de renfort 22 présente un taux de porosité supérieur à 18% et de préférence compris entre 18% et 80% pour assurer une transparence acoustique de la paroi de renfort 22 tout en conservant une bonne capacité de transfert des efforts.

Chaque paroi de renfort 22 s'étend à l'intérieur du cœur 12 depuis le coin formé par un bord 24 ou 26 du panneau 10 et la couche d'entrée 16. La paroi de renfort 22 s'étend de manière rectiligne à l'intérieur du cœur 12 jusqu'à atteindre la couche réfléchissante 14.

L'angle α formé par une paroi de renfort avec la couche d'entrée 16 est préférentiellement compris entre 15° et 70°.

La paroi de renfort 22 est réalisée en une seule pièce avec la portion 140 de la couche réfléchissante 14 située entre les parois de renfort 22, la paroi de renfort 22 étant perforée tandis que la portion 140 de couche réfléchissante 14 entre les parois de renfort 22 est acoustiquement opaque. Les portions 142 de couche réfléchissante 14 s'étendant en regard d'une paroi de renfort 22, c'est-à-dire entre un bord 24 ou 26 et la portion 140 de couche réfléchissante 14 située entre les parois de renfort 22, étant ajoutés par-dessus les parois de renfort 22 lors de la fabrication du panneau 10 et solidarisée au reste du panneau 10 en alignant les parois 180 des alvéoles 18 du cœur 12 pour assurer l'efficacité du traitement acoustique. Les parois 180 des alvéoles 18 peuvent ne pas être parfaitement alignées sans que l'efficacité du traitement acoustique ne soit trop affectée. En effet, les parois 180 guident l'onde acoustique dans les alvéoles 18. Si les parois 180 ont des clinquants parallèles, ce guidage s'effectue correctement même si les parois 180 ne sont pas alignées de part et d'autre de la paroi de renfort 22 tant que cette dernière est acoustiquement transparente. Le terme clinquant désigne, pour un nid d'abeilles, les parois définissant les alvéoles.

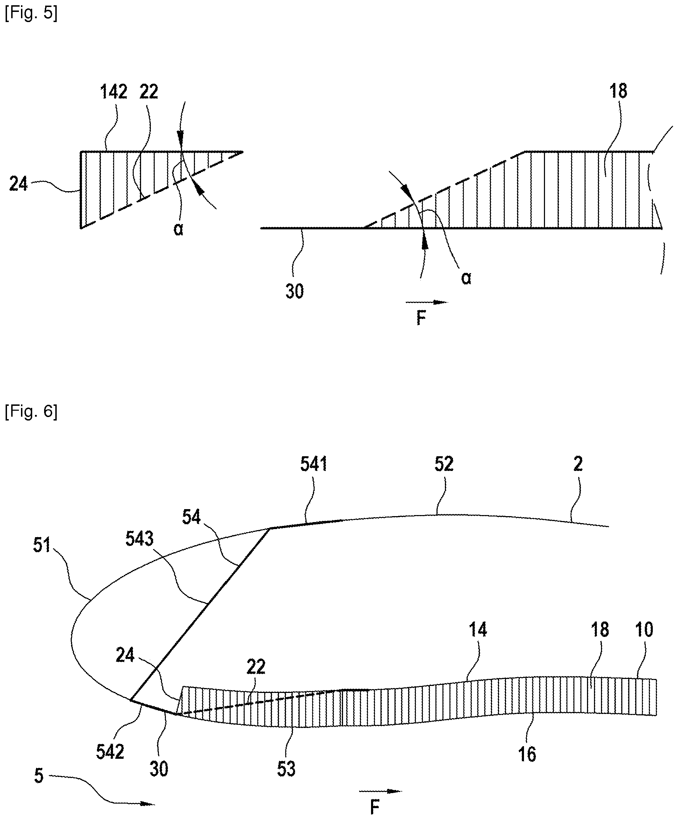

La portion triangulaire, illustrée notamment sur les figures 4 et 5, la figure 5 présentant un zoom de la figure 5 avec la portion triangulaire séparée sur reste du panneau, séparée du reste du panneau par une paroi de renfort 22 peut être rapportée et cocuite lors de la fabrication.

Sur la figure 6 est illustré schématiquement une vue en coupe d'une portion de la nacelle 2 de l'ensemble propulsif 1 de la figure 2 selon un mode de réalisation de l'invention.

Sur la figure 6 est illustrée le canal d'entrée 5 recevant l'écoulement fluidique F et la portion de la nacelle 2 qui délimite radialement à l'extérieur le canal d'entrée 5. La nacelle 2 comprend à cet endroit une lèvre frontale 51 arrondie et se prolongeant d'un côté par une paroi radialement externe 52 de la nacelle 2 et, de l'autre côté, par une paroi radialement interne 53 de la nacelle 2.

Pour renforcer la structure de la nacelle 2 sur cette portion, la nacelle comprend une cloison de renfort 54. La cloison de renfort 54 comprend une portion externe 541 fixée sur la paroi radialement externe 52, une portion interne 542 fixée sur la paroi radialement interne 51, et une portion centrale 543 s'étendant entre la portion interne 542 et la portion externe 541 selon une direction rectiligne, à distance de la lèvre frontale 51.

La nacelle 2 comprend un panneau de traitement acoustique 10 tel que décrit ci-dessus. Le panneau 10 est monté sur la paroi radialement interne 53 de la nacelle 2 pour que sa couche d'entrée 16 soit au contact de l'écoulement fluidique F. Le panneau 10 comprend sur son bord 24 visible sur la figure 6, une bordure de fixation 30 qui vient dans le prolongement de la couche d'entrée 16, à l'extérieur de la zone couverte par le cœur 12 du panneau 10.

Dans un mode de réalisation, la bordure de fixation 30 peut être fixée sur la paroi radialement interne 53 de la nacelle, en amont de la portion interne 542 de la cloison de renfort 54 ou bien sur la portion interne 542 de la cloison de renfort 54.

Dans un autre mode de réalisation, la cloison de renfort 54 et la bordure de fixation 30 du côté du bord 24 du panneau 10 peuvent être réalisés en une seule pièce.

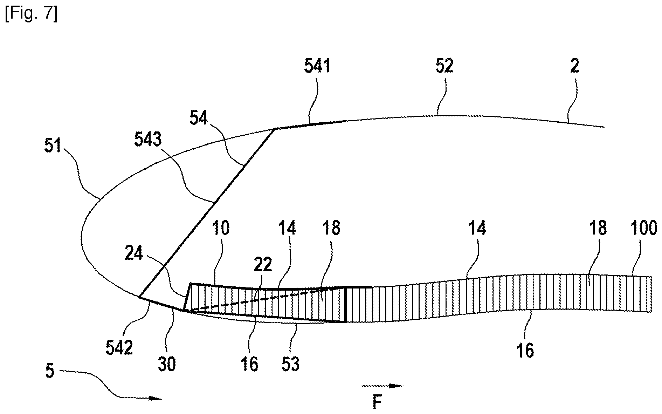

Sur la figure 7 est illustrée une variante de réalisation du canal d'entrée de la figure 6. Dans cette variante, la nacelle comprend deux panneaux de traitement acoustiques : un premier panneau acoustique classique 100 dépourvu de paroi de renfort, et un second panneau de traitement acoustique 10 comprenant une paroi de renfort 22, le premier panneau 100 étant adjacent au second panneau 10. Le second panneau de traitement acoustique 10 est traversé sur toute sa longueur par la paroi de renfort 22. En amont, la paroi de renfort 22 s'étend à l'extérieur du panneau 10 dans le prolongement de la seconde peau 16 et est fixée sur la portion interne 542 de la cloison de renfort 54. Et en aval, la paroi de renfort 22 s'étend à l'extérieur du panneau 10 dans le prolongement de la première peau 14 et est fixée au premier panneau de traitement acoustique 100.

En d'autres termes, la bordure de fixation 30 qui s'étend dans le prolongement de la couche d'entrée 16, peut être formée par la portion de paroi de renfort 22 s'étendant à l'extérieur du panneau 10 dans le prolongement de la seconde peau 16.

Ainsi, les deux bordures de fixation 30, les deux parois de renfort 22 et la portion 140 de couche réfléchissante 14 située entre les parois de renfort 22 peuvent être formées dans un même matériau, voire en une seule pièce.

La seconde peau 16 du second panneau de traitement acoustique 10 n'est pas solidaire de la paroi radialement interne 53 de la nacelle 2.

Par ailleurs dans ce mode de réalisation la hauteur des deux panneaux 10 et 100 peut être différente.

L'invention permet ainsi de fournir un panneau de traitement acoustique pour turbomachine présentant un renforcement structurel permettant d'avoir une meilleure résistance aux contraintes de cisaillement qu'il peut subir lorsque la turbomachine est en fonctionnement tout en utilisant toute la surface du panneau pour le de traitement acoustique.

## Revendications

1. Panneau (10) de traitement acoustique destiné à être disposé sur au moins une paroi d'un ensemble propulsif d'aéronef (1) en contact avec un écoulement fluidique, le panneau (10) comprenant une première peau (14) acoustiquement réfléchissante, une seconde peau (16) acoustiquement poreuse destinée à être en contact avec un écoulement fluidique (F, F_{P}, F_{S}), une structure en nid d'abeilles (12) s'étendant entre la première peau (14) et la seconde peau (16) et comportant une pluralité de cavités (18), et au moins une paroi de renfort (22) acoustiquement transparente traversant une pluralité de cavités (18) de la structure en nid d'abeilles et s'étendant depuis la seconde peau (16) jusqu'à la première peau (14) en formant un angle non orthogonal avec les première et seconde peaux (14 et 16),
**caractérisé en ce que** ladite au moins une paroi de renfort (22) étant formée en une pièce avec la première peau (14) acoustiquement réfléchissante.

2. Panneau (10) de traitement acoustique selon la revendication 1, dans laquelle ladite au moins une paroi de renfort (22) acoustiquement transparente présente un taux de perforation supérieur ou égal à 18%.

3. Panneau (10) de traitement acoustique selon l'une des revendications 1 ou 2, dans lequel la structure en nid d'abeilles (12) s'étend, dans un plan parallèle à la seconde peau (16), à l'intérieur d'un périmètre extérieur, et ladite au moins une paroi de renfort (22) s'étend à l'intérieur de la structure en nid d'abeilles (12) depuis la seconde peau (16) jusqu'à la première peau (14) sur une portion de bordure (24, 26) de la structure du nid d'abeilles (12) s'étendant, dans le plan parallèle à la seconde peau (16), depuis ledit périmètre extérieur vers l'intérieur de la structure en nid d'abeilles (12).

4. Panneau (10) selon l'une des revendications 1 à 3, dans lequel la paroi de renfort (22) comprend une portion d'attache s'étendant à l'extérieur du panneau (10) dans le prolongement de la seconde peau (16), la portion d'attache étant destinée à être couplée à une paroi de l'ensemble propulsif (1).

5. Panneau (10) selon l'une des revendications 1 à 4, dans lequel la paroi de renfort (22) comprend une portion de fixation s'étendant à l'extérieur du panneau (10) dans le prolongement de la première peau (14), la portion de fixation étant destinée à être couplée à une paroi de l'ensemble propulsif (1).

6. Panneau (10) selon l'une des revendications 1 à 4, comprenant au moins une portion de panneau (10) s'étendant, selon une direction orthogonale à la première peau (14), entre une paroi de renfort (22) et une portion de (142) de première peau (14), ladite au moins une portion de panneau étant rapportée et fixée au reste du panneau par cocuisson lors de la fabrication du panneau.

7. Ensemble propulsif (1) destiné à être monté sur un aéronef, l'ensemble propulsif (1) comprenant au moins un panneau de traitement acoustique (10) selon l'une des revendications 1 à 6.

8. Ensemble propulsif (1) selon la revendication 7, comprenant au moins une entrée d'air (5) dotée d'une lèvre frontale (51), d'une paroi externe (52) et d'une paroi interne (53), et raccordée à un desdits panneaux de traitement acoustique (10) formant au moins une partie de la paroi interne (53).

9. Ensemble propulsif (1) selon la revendication 8, dans lequel ladite paroi de renfort (22) dudit panneau de traitement acoustique (10) se prolonge à l'extérieur dudit panneau (10) et est raccordée à la lèvre frontale (51) de l'entrée d'air (5).

10. Aéronef comprenant au moins un ensemble propulsif (1) selon l'une des revendications 6 à 9.

11. Procédé de fabrication d'un panneau (10) de traitement acoustique destiné à être disposé sur au moins une paroi d'un ensemble propulsif d'aéronef (1) en contact avec un écoulement fluidique, le procédé de fabrication du panneau (10) comprenant une étape d'empilement d'une première peau (14) acoustiquement réfléchissante, d'une structure en nid d'abeilles (12) et d'une seconde peau (16) acoustiquement poreuse destinée à être en contact avec un écoulement fluidique (F, F_{P}, F_{S}), la structure en nid d'abeilles (12) s'étendant entre la première peau (14) et la seconde peau (16) et comportant une pluralité de cavités (18), et une étape de pose d'au moins une paroi de renfort (22) acoustiquement transparente traversant une pluralité de cavités (18) de la structure en nid d'abeilles et s'étendant depuis la seconde peau (16) jusqu'à la première peau (14) en formant un angle non orthogonal avec les première et seconde peaux (14 et 16),
**caractérisé en ce que** ladite au moins une paroi de renfort (22) étant formée en une pièce avec la première peau (14) acoustiquement réfléchissante.

12. Procédé selon la revendication 11, comprenant une étape réalisation d'au moins une portion de panneau destiné à s'étendre, selon une direction orthogonale à la première peau (14), entre une paroi de renfort (22) et une portion (142) de première peau (14), et une étape de raccordement par cocuisson de ladite au moins une portion de panneau au reste du panneau.

## Patentansprüche

1. Paneel (10) zur akustischen Behandlung, das dazu bestimmt ist, an zumindest einer Wand einer Triebwerksanordnung (1) eines Luftfahrzeugs, die mit einer Fluidströmung in Kontakt steht, angeordnet zu werden, wobei das Paneel (10) eine schallreflektierende erste Haut (14), eine schalldurchlässige zweite Haut (16), die dazu bestimmt ist, mit einer Fluidströmung (F, F_{P}, F_{S}) in Kontakt zu stehen, eine wabenförmige Struktur (12), die sich zwischen der ersten Haut (14) und der zweiten Haut (16) erstreckt und eine Vielzahl von Hohlräumen (18) beinhaltet, und zumindest eine schalldurchlässige Verstärkungswand (22) umfasst, die mehrere Hohlräume (18) der wabenförmigen Struktur durchquert und sich von der zweiten Haut (16) bis zu der ersten Haut (14) erstreckt, wobei sie einen nicht orthogonalen Winkel mit der ersten und der zweiten Haut (14 und 16) bildet,
**dadurch gekennzeichnet, dass** die zumindest eine Verstärkungswand (22) in einem Stück mit der schallreflektierenden ersten Haut (14) ausgebildet ist.

2. Paneel (10) zur akustischen Behandlung nach Anspruch 1, wobei die zumindest eine schalldurchlässige Verstärkungswand (22) einen Perforationsgrad von mehr als oder gleich 18 % aufweist.

3. Paneel (10) zur akustischen Behandlung nach einem der Ansprüche 1 oder 2, wobei die wabenförmige Struktur (12) sich in einer Ebene parallel zu der zweiten Haut (16) innerhalb eines äußeren Umfangs erstreckt, und die zumindest eine Verstärkungswand (22) sich innerhalb der wabenförmigen Struktur (12) von der zweiten Haut (16) bis zu der ersten Haut (14) über einen Randabschnitt (24, 26) der wabenförmigen Struktur (12) erstreckt, der sich in der Ebene parallel zu der zweiten Haut (16) von dem äußeren Umfang zu dem Inneren der wabenförmigen Struktur (12) hin erstreckt.

4. Paneel (10) nach einem der Ansprüche 1 bis 3, wobei die Verstärkungswand (22) einen Anbringungsabschnitt umfasst, der sich von der Außenseite des Paneels (10) in der Verlängerung der zweiten Haut (16) erstreckt, wobei der Anbringungsabschnitt dazu bestimmt ist, mit einer Wand der Triebwerksanordnung (1) gekoppelt zu werden.

5. Paneel (10) nach einem der Ansprüche 1 bis 4, wobei die Verstärkungswand (22) einen Befestigungsabschnitt umfasst, der sich von der Außenseite des Paneels (10) in der Verlängerung der ersten Haut (14) erstreckt, wobei der Befestigungsabschnitt dazu bestimmt ist, mit einer Wand der Triebwerksanordnung (1) gekoppelt zu werden.

6. Paneel (10) nach einem der Ansprüche 1 bis 4, umfassend zumindest einen Abschnitt des Paneels (10), der sich einer Richtung orthogonal zu der ersten Haut (14) folgend zwischen einer Verstärkungswand (22) und einem Abschnitt (142) der ersten Haut (14) erstreckt, wobei der zumindest eine Paneelabschnitt während der Herstellung des Paneels an den übrigen Teil des Paneels angestückt und durch gemeinsames Aushärten daran befestigt wird.

7. Triebwerksanordnung (1), die dazu bestimmt ist, an einem Luftfahrzeug montiert zu werden, wobei die Triebwerksanordnung (1) zumindest ein Paneel zur akustischen Behandlung (10) nach einem der Ansprüche 1 bis 6 umfasst.

8. Triebwerksanordnung (1) nach Anspruch 7, umfassend zumindest einen Lufteinlass (5), der mit einer vorderen Lippe (51), einer Außenwand (52) und einer Innenwand (53) ausgestattet ist und mit einem der Paneele zur akustischen Behandlung (10) verbunden ist, die zumindest einen Teil der Innenwand (53) bilden.

9. Triebwerksanordnung (1) nach Anspruch 8, wobei die Verstärkungswand (22) des Paneels zur akustischen Behandlung (10) sich außerhalb des Paneels (10) fortsetzt und mit der vorderen Lippe (51) des Lufteinlasses (5) verbunden ist.

10. Luftfahrzeug, umfassend zumindest eine Triebwerksanordnung (1) nach einem der Ansprüche 6 bis 9.

11. Verfahren zur Herstellung eines Paneels (10) zur akustischen Behandlung, das dazu bestimmt ist, an zumindest einer Wand einer Triebwerksanordnung (1) eines Luftfahrzeugs, die mit einer Fluidströmung in Kontakt steht, angeordnet zu werden, wobei das Verfahren zur Herstellung des Paneels (10) einen Schritt des Stapelns einer schallreflektierenden ersten Haut (14), einer wabenförmigen Struktur (12) und einer schalldurchlässigen zweiten Haut (16) umfasst, die dazu bestimmt ist, mit einer Fluidströmung (F, F_{P}, F_{S}) in Kontakt zu stehen, wobei die wabenförmige Struktur (12) sich zwischen der ersten Haut (14) und der zweiten Haut (16) erstreckt und eine Vielzahl von Hohlräumen (18) beinhaltet, sowie den Schritt des Einlegens zumindest einer schalldurchlässigen Verstärkungswand (22), die mehrere Hohlräume (18) der wabenförmigen Struktur durchquert und sich von der zweiten Haut (16) bis zu der ersten Haut (14) erstreckt, wobei sie einen nicht orthogonalen Winkel mit der ersten und der zweiten Haut (14 und 16) bildet,
**dadurch gekennzeichnet, dass** die zumindest eine Verstärkungswand (22) in einem Stück mit der ersten schallreflektierenden Haut (14) ausgebildet ist.

12. Verfahren nach Anspruch 11, umfassend einen Schritt der Verwirklichung zumindest eines Paneelabschnitts, der dazu bestimmt ist, sich einer Richtung orthogonal zu der ersten Haut (14) folgend zwischen einer Verstärkungswand (22) und einem Abschnitt (142) der ersten Haut (14) zu erstrecken, und einen Schritt der Verbindung des zumindest einen Paneelabschnitts mit dem übrigen Teil des Paneels durch gemeinsames Aushärten.

## Claims

1. An acoustic treatment panel (10) intended to be disposed on at least one wall of an aircraft propulsion unit (1) in contact with a fluid flow, the panel (10) comprising a first acoustically reflective skin (14), a second acoustically porous skin (16) intended to be in contact with a fluid flow (F, F_{P}, F_{S}), a honeycomb structure (12) extending between the first skin (14) and the second skin (16) and comprising a plurality of cavities (18), and at least one acoustically transparent reinforcing wall (22) passing through a plurality of cavities (18) of the honeycomb structure and extending from the second skin (16) to the first skin (14) forming a non-orthogonal angle with the first and second skins (14 and 16),
**characterised in that** said at least one reinforcing wall (22) is formed in one piece with the first acoustically reflective wall (14).

2. The acoustic treatment panel (10) according to claim 1, wherein said at least one acoustically transparent reinforcing wall (22) has a perforation rate greater than or equal to 18%.

3. The acoustic treatment panel (10) according to one of claims 1 or 2, wherein the honeycomb structure (12) extends, in a plane parallel to the second skin (16), inside an outer perimeter, and said at least one reinforcing wall (22) extends inside the honeycomb structure (12) from the second skin (16) to the first skin (14) on a border portion (24, 26) of the honeycomb structure (12) extending, in the plane parallel to the second skin (16), from said outer perimeter to the interior of the honeycomb structure (12).

4. The panel (10) according to one of claims 1 to 3, wherein the reinforcing wall (22) comprises a fastening portion extending to the outside of the panel (10) in the elongation of the second skin (16), the fastening portion being intended to be coupled to a wall of the propulsion unit (1).

5. The panel (10) according to one of claims 1 to 4, wherein the reinforcing wall (22) comprises a fixing portion extending to the outside of the panel (10) in the elongation of the first skin (14), the fixing portion being intended to be coupled to a wall of the propulsion unit (1).

6. The panel (10) according to one of claims 1 to 4, comprising at least one portion of panel (10) extending, in a direction orthogonal to the first skin (14), between a reinforcing wall (22) and a portion of (142) the first skin (14), said at least one portion of panel being attached and fixed to the remainder of the panel by co-firing during the manufacture of the panel.

7. A propulsion unit (1) intended to be mounted on an aircraft, the propulsion unit (1) comprising at least one acoustic treatment panel (10) according to one of claims 1 to 6.

8. The propulsion unit (1) according to claim 7, comprising at least one air inlet (5) provided with a front lip (51), an outer wall (52) and an inner wall (53), and connected to one of said acoustic treatment panels (10) forming at least one part of the inner wall (53).

9. The propulsion unit (1) according to claim 8, wherein said reinforcing wall (22) of said acoustic treatment panel (10) continues outside of said panel (10) and is connected to the front lip (51) of the air inlet (5).

10. An aircraft comprising at least one propulsion unit (1) according to one of claims 6 to 9.

11. A method for manufacturing an acoustic treatment panel (10) intended to be disposed on at least one wall of an aircraft propulsion unit (1) in contact with a fluid flow, the method for manufacturing the panel (10) comprising a step of stacking a first acoustically reflective skin (14), a honeycomb structure (12) and a second acoustically porous skin (16) intended to be in contact with a fluid flow (F, F_{P}, F_{S}), the honeycomb structure (12) extending between the first skin (14) and the second skin (16) and comprising a plurality of cavities (18), and a step of installing at least one acoustically transparent reinforcing wall (22) passing through a plurality of cavities (18) of the honeycomb structure and extending from the second skin (16) to the first skin (14) forming a non-orthogonal angle with the first and second skins (14 and 16),
**characterised in that** said at least one reinforcing wall (22) is formed in one piece with the first acoustically reflective wall (14).

12. The method according to claim 11, comprising a step of producing at least one portion of panel intended to extend, in a direction orthogonal to the first skin (14), between a reinforcing wall (22) and a portion (142) of the first skin (14), and a step of connecting, by co-firing, said at least one portion of panel to the remainder of the panel.
